(19) Europäisches Patentamt
European Patent Office
Office européen des brevets

(11) EP 1 379 532 B1

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(21) Anmeldenummer: **02704719.0**

(22) Anmeldetag: **15.02.2002**

(51) Int Cl.[7]: **C07F 5/04**

(86) Internationale Anmeldenummer:
**PCT/EP2002/001639**

(87) Internationale Veröffentlichungsnummer:
**WO 2002/068432 (06.09.2002 Gazette 2002/36)**

(54) **BORCHELATKOMPLEXE**

BORON CHELATE COMPLEXES

COMPLEXES DE CHELATE DE BORE

(84) Benannte Vertragsstaaten:
**DE FR GB**

(30) Priorität: **22.02.2001 DE 10108592**

(43) Veröffentlichungstag der Anmeldung:
**14.01.2004 Patentblatt 2004/03**

(73) Patentinhaber: **Chemetall GmbH**
**60487 Frankfurt am Main (DE)**

(72) Erfinder:
- **WIETELMANN, Ulrich**
  **61381 Friedrichsdorf (DE)**
- **LISCHKA, Uwe**
  **60437 Niedereschbach (DE)**
- **SCHADE, Klaus**
  **65205 Wiesbaden (DE)**
- **PANITZ, Jan-Christoph**
  **60487 Frankfurt (DE)**

(74) Vertreter: **Uppena, Franz, Dr.**
**Dynamit Nobel Aktiengesellschaft,**
**Patente, Marken & Lizenzen**
**53839 Troisdorf (DE)**

(56) Entgegenhaltungen:
**EP-A- 0 784 042**
**EP-A- 1 074 555**
**DE-C- 19 829 030**
**EP-A- 1 069 128**
**WO-A-01/99209**

EP 1 379 532 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Borchelatkomplexe, ein Verfahren zu deren Herstellung sowie deren Verwendung als Elektrolyte und als Katalysatoren.

Mobile elektronische Geräte benötigen zur unabhängigen Stromversorgung immer leistungsfähigere, wiederaufladbare Batterien. Neben Nickel/Cadmiumund Nickel/Metallhydrid-Akkumulatoren sind dafür speziell wiederaufladbare Lithiumbatterien geeignet, die im Vergleich zu den Nickelbatterien eine wesentlich höhere Energiedichte aufweisen. Die marktüblichen Systeme weisen eine Klemmenspannung von ca. 3 V auf; das höhere Potential hat zur Folge, dass wasserbasierte Elektrolytsysteme in Lithiumbatterien nicht verwendbar sind. Statt dessen kommen in Flüssigsystemen nichtwässrige, zumeist organische Elektrolyte (das sind Lösungen eines Lithiumsalzes in organischen Lösungsmitteln, wie Carbonate, Ether oder Ester) zum Einsatz.

Im derzeitig dominierenden Batteriedesign - Lithiumionenbatterien mit Flüssigelektrolyten - wird als Leitsalz praktisch ausschließlich Lithiumhexafluorophosphat ($LiPF_6$) verwendet. Dieses Salz besitzt die notwendigen Voraussetzungen für einen Einsatz in Hochenergiezellen, d. h. es ist in aprotischen Lösungsmitteln gut löslich, es führt zu Elektrolyten mit hohen Leitfähigkeiten und es weist ein hohes Maß an elektrochemischer Stabilität auf. Oxidative Zersetzung tritt erst bei Potentialen > ca. 4,5 V auf. $LiPF_6$ hat jedoch schwerwiegende Nachteile, die hauptsächlich auf seine mangelnde thermische Stabilität (Zersetzung oberhalb ca. 130 °C) zurückgeführt werden können. Außerdem wird beim Kontakt mit Feuchtigkeit ätzender und giftiger Fluorwasserstoff freigesetzt, der zum einen die Handhabung erschwert und zum anderen Batteriebestandteile, z. B. die Kathode, angreift und schädigt.

Vor diesem Hintergrund gibt es intensive Bemühungen, alternative Leitsalze zu entwickeln. Als solche wurden vor allem Lithiumsalze mit perfluorierten organischen Resten geprüft. Dabei handelt es sich um das Lithiumtrifluormethansulfonat ("Li-Triflat"), Lithiumimide (Lithium-bis(perfluoralkylsulfonyl)-imide) sowie Lithiummethide (Lithium-tris (perfluoralkylsulfonyl)methide). Alle diese Salze erfordern relativ aufwendige Herstellverfahren, sind deshalb relativ teuer und haben andere Nachteile wie Korrosivität gegenüber Aluminium oder schlechte Leitfähigkeit.

Als weitere Verbindungsklasse für die Verwendung als Leitsalz in wiederaufladbaren Lithiumbatterien wurden Lithiumorganoborate untersucht. Wegen deren geringer Oxidationsstabilität und sicherheitstechnischer Bedenken bei der Handhabung von Triorganoboranen scheiden sie jedoch für kommerzielle Systeme aus.

Einen wesentlichen Fortschritt stellen die in EP 698301 für die Verwendung in galvanischen Zellen vorgeschlagenen Lithiumkomplexsalze des Typs $ABL_2$ (wobei A Lithium oder ein quartäres Ammoniumion, B Bor und L einen zweizähnigen Liganden, der über zwei Sauerstoffatome an das Boratom gebunden ist, bedeutet) dar. Die vorgeschlagenen Salze, deren Liganden wenigstens einen aromatischen Rest enthalten, weisen jedoch nur dann eine ausreichende elektrochemische Stabilität auf, wenn der Aromat mit elektronenziehenden Resten, typischerweise Fluor, substituiert ist oder wenigstens ein Stickstoffatom im Ring aufweist. Solche Chelatverbindungen sind kommerziell nicht verfügbar und nur mit hohen Kosten herzustellen. Die vorgeschlagenen Produkte konnten sich deshalb nicht am Markt durchsetzen.

Ganz ähnliche Borverbindungen werden in EP 907217 als Bestandteile in organischen Elektrolytzellen vorgeschlagen. Als Bor-enthaltendes Leitsalz werden Verbindungen der allgemeinen Formel LiBXX' , wobei die Liganden X und X' gleich oder verschieden sein können und jeder Ligand eine elektronenziehende, Sauerstoff enthaltende Gruppe, die zum Boratom bindet, enthält. Die aufgeführten Verbindungen (Lithium-bordisalicylat und ein spezielles Imidsalz) weisen jedoch die bereits oben erwähnten Nachteile auf.

Das in der DE 19829030 erstmals beschriebene Lithium-bis(oxalato)borat (LOB) ist das erste für die Verwendung als Elektrolyt beschriebene borzentrierte Komplexsalz, das als Chelatkomponente eine Dicarbonsäure (in diesem Fall Oxalsäure) verwendet. Die Verbindung ist einfach herstellbar, ungiftig und elektrochemisch bis etwa 4,5 V stabil, was ihre Verwendung in Lithiumionenbatterien ermöglicht. Nachteilig ist jedoch, dass sie in neuen Batteriesystemen mit Zellspannungen > 3 V kaum eingesetzt werden kann. Für derartige elektrochemische Speicher werden Salze mit Stabilitäten ≥ ca. 5 V benötigt. Weiterhin nachteilig ist, dass Lithium-bis(oxalato)borat keine strukturellen Variationsmöglichkeiten zulässt, ohne das Grundgerüst zu zerstören.

In der EP 1035612 werden Additive u. a. der Formel

$$Li^+B^-(OR^1)_m(OR^2)_p$$

genannt,
mit m und p = 0, 1, 2, 3 oder 4, wobei m + p = 4 und

$R^1$ und $R^2$ gleich oder verschieden und gegebenenfalls durch eine Einfachoder Doppelbindung direkt miteinander verbunden sind, jeweils einzeln oder gemeinsam die Bedeutung einer aromatischen oder aliphatischen Carbon- oder Sulfonsäure haben, oder jeweils einzeln oder gemeinsam die Bedeutung eines aromatischen Rings aus der Gruppe Phenyl, Naphthyl, Anthracenyl oder Phenanthrenyl haben, der unsubstituiert oder ein- bis vierfach durch A oder Hal substituiert sein kann, haben, oder jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben, oder jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, haben, und Hal = F, Cl oder Br, und
A = Alkylrest mit 1 bis 6 C-Atomen, der ein- bis dreifach halogeniert sein kann.

Als besonders bevorzugte Additive sind Lithium-bis[1,2-benzendiolato-(2-)O,O']borat(1-), Lithium-bis[3-fluoro-1,2-benzendiolato(2-)O,O']borat(1-), Lithium-bis[2,3-naphthalindiolato(2-)O,O']borat(1-), Lithium-bis[2,2'-biphenyldiolato(2-)O,O']borat(1-), Lithium-bis[salicylato(2-)O,O']borat(1-), Lithium-bis[2-olato-benzensulfonato(2-)O,O']borat (1-), Lithium-bis[5-fluoro-2-olato-benzensulfonato(2-)O,O']borat, Lithiumphenolat und Lithium-2,2-biphenolat zu nennen. Dies sind alles *symmetrische* Lithiumchelatoborate vom Typ $Li[BL_2]$.

Als eine elektrochemisch besonders stabile einfache Lithium(chelato)boratverbindung wurde von C. Angell das Lithium-bis(malonato)borat beschrieben, das ein elektrochemisches Fenster bis 5 V aufweisen soll. Die betrachtete Verbindung hat zum Nachteil, dass sie in den üblichen Batterielösungsmitteln praktisch unlöslich ist (z. B. nur 0,08 molar in Propylencarbonat), so dass es lediglich in DMSO und ähnlichen für Batterien prohibitiven Lösungsmitteln gelöst und charakterisiert werden kann (Wu Xu und C. Austen Angell, Electrochem. Solid-State Lett. 4, E1 - E4, 2001).

Chelatoborate können weiterhin in protonierter Form (d. h. $H[BL_2]$) mit L = einem zweizähnigem Liganden, der über zwei Sauerstoffatome an das Boratom gebunden ist, vorliegen. Derartige Verbindungen besitzen eine extrem hohe Säurestärke und können deshalb als sogenannte Supersäuren in der organischen Synthese als Katalysatoren für Zyklisierungen, Aminierungen usw. eingesetzt werden. Beispielsweise wurde Hydrogen-bis(oxalato)borat als Katalysator zur Herstellung von Tocopherol vorgeschlagen (US 5,886,196). Nachteil dieses Katalysators ist die relativ schlechte hydrolytische Beständigkeit.

Aufgabe der vorliegenden Erfindung ist es, die Nachteile des Stands der Technik zu überwinden und insbesondere Stoffe für Leitsalze bereitzustellen, die relativ einfach und kostengünstig aus kommerziell verfügbaren Rohstoffen hergestellt werden können, die eine ausreichende Oxidationsstabilität von mindestens 4,5 V aufweisen und die gut löslich in üblicherweise verwendeten "Batterielösungsmitteln" sind. Weiterhin sollen die Stoffe gegen Zersetzung durch Wasser oder Alkohole relativ beständig sein.

Die Aufgabe wird gelöst durch "gemischte" Borchelatkomplexe der allgemeinen Formel

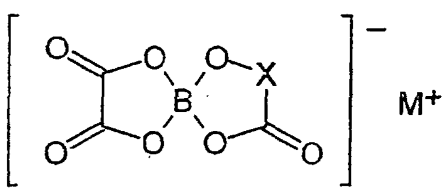

mit
entweder X = $-C(R^1R^2)-$ oder $-C(R^1R^2)-C(=O)-$, wobei
$R^1$, $R^2$ = unabhängig voneinander H, Alkyl (mit 1 bis 5 C-Atomen), Aryl, Silyl oder ein Polymer sind, und einer der Alkylreste $R^1$ oder $R^2$ mit einem weiteren Chelatoboratrest verbunden sein kann,
oder X = 1,2-Aryl, mit bis zu 2 Substituenten S in den Positionen 3 bis 6

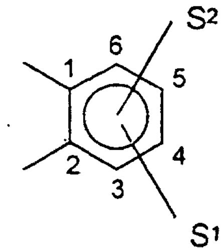

wobei $S^1$, $S^2$ = unabhängig voneinander Alkyl (mit 1 bis 5 C-Atomen), Fluor oder Polymer sind, sowie $M^+$ = $Li^+$, $Na^+$, $K^+$, $Rb^+$, $Cs^+$ oder $[(R^3R^4R^5R^6)N]^+$ oder $H^+$ ist, mit $R^3$,$R^4$,$R^5$,$R^6$ = unabhängig voneinander H oder Alkyl mit bevorzugt 1 bis 4 C-Atomen.

Es wurde überraschend gefunden, dass die aufgeführten Borate mit zwei unterschiedlichen Liganden, wobei einer der Oxalatorest ist, wesentlich bessere Löslichkeiten aufweisen als die symmetrischen Vergleichsverbindungen.

Bevorzugt sind folgende Verbindungen: Hydrogen-(malonato,oxalato)borat (HMOB), Hydrogen-(glykolato, oxalato)borat (HGOB), Hydrogen-(lactato,oxalato)borat (HLOB), Hydrogen-(oxalato,salicylato)borat (HOSB) und Bis [hydrogen(oxalato,tartrato)borat] (BHOTB), sowie die Lithium-, Cäsium- und Tetraalkylammoniumsalze der genannten Säuren.

Die im Vergleich mit den symmetrischen Vergleichsverbindungen bessere Löslichkeit der gemischten Borate wird am Beispiel der Lithiumverbindungen in Tabelle 1 demonstriert:

Tabelle 1:

| **Löslichkeiten verschiedener Lithiumboratkomplexsalze (in mol/kg) bei Raumtemperatur** | | | | | | |
|---|---|---|---|---|---|---|
| | LOB | LLB | LMB | LOMB | LLOB | LOSB |
| THF | 1,90 | <0,01 | 0,09 | 0,17 | 1,59 | 1,21 |
| PC | 0,88 | <0,01 | 0,02 | 0,17 | 0,17 | 1,50 |
| γ-BL | 1,55 | 0,02 | 0,13 | 0,62 | 0,96 | 0,98 |
| 1,2-DME | 1,30 | <0,01 | 0,003 | 0,20 | 0,93 | 0,43 |
| Aceton | 1,82 | <0,01 | 0,03 | 0,43 | 1,38 | 0,51 |

LOB = Lithium-bis(oxalato)borat THF = Tetrahydrofuran
LLB = Lithium-bis(lactato)borat PC = Propylencarbonat
LMB = Lithium-bis(matonato)borat γ-BL = γ-Butyrolacton
LOMB = Lithium-(malonato,oxalato)borat 1,2-DME =
LLOB = Lithium-(lactato,oxalato)borat 1,2-Dimethoxyethan
LOSB = Lithium-(oxalato,salicylato)borat

Es ist ersichtlich, dass das nicht erfindungsgemäße LOB in den meisten Fällen die beste Löslichkeit aufweist. Erstaunlich ist aber die im Vergleich zu den anderen symmetrischen Verbindungen (LMB und LLB) wesentlich verbesserte Löslichkeit der gemischten Chelatoborate. Im Lösungsmittel Propylencarbonat ist das gemischte LOSB sogar wesentlich besser löslich als LOB.

Die Tabelle 2 zeigt die Hydrolyseanfälligkeit verschiedener Chelatoborate.

Tabelle 2:

| **Hydrolysegrad 5 %-iger Lösungen in Wasser nach 2-stündigem Rühren bei Raumtemperatur** | | | |
|---|---|---|---|
| | LOB | LMB | LMOB |
| Hydrolysegrad (%) | > 50 | 5 | 15 |

Die erfindungsgemäßen Metallsalze mit gemischten Borchelatanionen lassen sich in relativ hohen Konzentrationen in den für Hochleistungsbatterien typischen aprotischen Lösungsmitteln wie Carbonaten, Lactonen und Ethem lösen. In der Tabelle 3 sind die beobachteten Leitfähigkeiten bei Raumtemperatur angegeben:

Tabelle 3:

| Leitfähigkeiten nichtwässriger Elektrolyte mit gemischten Chelatoboratsalzen in γ-BL, 1,2-DME und THF bei Raumtemperatur | | | | | | |
|---|---|---|---|---|---|---|
| | γ-BL | | 1,2-DME | | THF | |
| | Konz.[1)] | Leitf.[2)] | Konz.[1)] | Leitf.[2)] | Konz [1)] | Leitf.[2)] |
| LLOB | 0,96 | 2,61 | 0,93 | 6,52 | 1,59 | 2,91 |
| LSOB | | | 0,43 | 4,17 | 1,21 | 3,17 |
| LMOB | 0,54 | 3,59 | | | 0,17 | 0,41 |
| LMB | 0,13 | 1,65 | | | 0,009 | 0,01 |
| LLB | 0,02 | 0,01 | unlösl. | 0 | unlösl. | 0 |
| LOB | 1,04 | 6,96 | | | | |

1) in mmol/g,
2) in mS/cm

Aus Tabelle 3 ist zu entnehmen, dass Lösungen der gemischten Boratsalze die für den Betrieb von Lithiumbatterien notwendigen Leitfähigkeiten von > 2 mS/cm aufweisen. Im Gegensatz dazu haben die nicht erfindungsgemäßen Lösungen der symmetrisch substituierten Salze LMB und LLB deutlich niedrigere oder praktisch gar keine Leitfähigkeiten.

Die Leitfähigkeiten können entsprechend dem Stand der Technik, beispielsweise durch Kombination mindestens eines Lösungsmittels mit hoher Dielektrizitätskonstante (z. B. Ethylencarbonat, Propylencarbonat) mit mindestens einem Viskositätsminderer (z. B. Dimethylcarbonat, Butylacetat, 1,2-Dimethoxyethan, 2-Methyltetrahydrofuran), optimiert werden.

Die Salze mit gemischten Chelatoboratanionen weisen weiterhin das geforderte hohe Maß elektrochemischer Stabilität auf. Beispielsweise hat das erfindungsgemäße Lithium-(lactato,oxalato)borat ein sogenanntes "elektrochemisches Fenster" von ca. 5 V, d.h. es ist im Bereich zwischen 0 und ca. 5 V ($Li/Li^+ = 0$) stabil, wie Figur 1 zeigt.

Die oben beschriebenen Borchelatkomplexe können mit bekannter Technik an Polymerverbindungen fixiert werden. So ist es möglich, die aciden, in α-Stellung zu Carbonylgruppen stehenden Wasserstoffatome mittels geeigneter Basen zu abstrahieren und die auf diese Weise entstehenden carbanionischen Spezies an funktionalisierte (z. B. halogenierte) Polymere zu addieren.

Herstellen lassen sich die erfindungsgemäßen Borchelatkomplexe durch Umsetzung von Borsäure oder Boroxid mit Oxalsäure und dem anderen Chelatbildner, gegebenenfalls in Gegenwart einer oxidischen Metallquelle, (z. B. $Li_2CO_3$, NaOH, $K_2O$), bzw. eines Ammoniumsalzes, beispielsweise gemäß:

$$H_3BO_3 + C_2O_4H_2 + L^2 \rightarrow H[B(C_2O_4)L^2] + 3\ H_2O$$

oder

$$0{,}5\ B_2O_3 + C_2O_4H_2 \cdot 2\ H_2O + L^2 + LiOH{\cdot}H_2O \rightarrow$$

$$Li[B(C_2O_4)L^2] + 5{,}5\ H_2O$$

$L^2$ = Dicarbonsäure (nicht Oxalsäure), Hydroxycarbonsäure oder Salicylsäure (welche auch maximal zweifach substituiert sein kann).

Bevorzugt werden stöchiometrische Mengen der Ausgangsstoffe eingesetzt d. h. dass das Molverhältnis Bor / Oxalsäure / Chelatbildner $L^2$ / gegebenenfalls oxidische Metallquelle, bzw. Ammoniumsalz etwa 1 : 1 : 1 : 1 beträgt. Kleinere Abweichungen von der theoretischen Stöchiometrie (z.B. 10 % nach oben oder unten) sind möglich, ohne dass starke Auswirkungen auf das Chelatoboratendprodukt auftreten. So wird bei einem Überschuss eines der Liganden das entsprechende symmetrische Endprodukt im Reaktionsgemisch in verstärktem Maße auftreten. So wird beispielsweise beim Einsatz von > 1 mol Oxalsäure pro Äquivalent Borrohstoff Bis-(oxalato)borat in nennenswerten Mengen gebildet werden. Wird die Umsetzung in Gegenwart eines oxidischen Lithiumrohstoffes durchgeführt, bildet sich LOB, das im Gemisch mit den erfindungsgemäßen gemischten Chelatoboraten bei Anwendungen als Batterieelektrolyt nicht stört. Wird demgegenüber eine Säure $L^2$, deren symmetrische Chelatoverbindung schwerlöslich ist, im Überschuss eingesetzt, so kann das Nebenprodukt $M[B(L^2)_2]$ durch einen einfachen Löse-/Filtrierschritt leicht abgetrennt werden. Wichtig ist, dass pro Äquivalent Borkomponente ca. 2 Mol Chelatbildner eingesetzt werden. Bei einem Unterschuss bleibt unumgesetzte Borkomponente oder unerwünschtes 1:1-Addukt (HO-B($C_2O_4$) oder HO-$BL^2$) übrig. Werden mehr als 2 Mol Chelatbildner eingesetzt, bleibt unumgesetzter Chelatbildner zurück; dieser muss aufwendig abgetrennt werden.

Die Umsetzung gemäß obiger Gleichungen erfolgt bevorzugt in der Weise, dass die Rohstoffkomponenten in einem zur azeotropen Wasserentfemung geeigneten Medium (z. B. Toluol, Xylol, Methylcyclohexan, perfluorierte Kohlenwasserstoffe mit mehr als 6 C-Atomen) suspendiert werden und das Wasser in bekannter Weise azeotrop entfernt wird.

Es ist auch möglich, die Synthese in wässriger Lösung vorzunehmen. Dabei werden die Komponenten in beliebiger Reihenfolge in Wasser eingetragen und unter Rühren, vorzugsweise bei vermindertem Druck, eingedampft. Nach Entfernung der Hauptmenge Wasser bildet sich ein festes Reaktionsprodukt, das je nach spezifischen Produkleigenschaften bei Temperaturen zwischen 100 und 180 °C und vermindertem Druck (z. B. 10 mbar) endgetrocknet wird. Außer Wasser eignen sich auch Alkohole und andere polare organische Lösungsmittel als Reaktionsmedien.

Schließlich kann die Produktherstellung auch ohne Zugabe irgendeines Lösungsmittels erfolgen, d. h. die handelsüblichen Rohstoffe werden gemischt und dann durch Wärmezufuhr erhitzt und unter vorzugsweise reduziertem Druck entwässert.

Die auf diese Weise hergestellten Säuren $H[BC_2O_4L^2]$ werden in der organischen Synthese als supersaure Katalysatoren, z. B. für Kondensationen, Hydroaminierungen, Debenzylierungen, eingesetzt. Lithiumsalze der gemischten Chelatoborate finden als Elektrolyte in galvanischen Zellen, vorzugsweise Lithiumbatterien Verwendung. Die Ammonium- und Cäsiumsalze können in elektrolytischen Doppelschichtkondensatoren eingesetzt werden.

Die Erfindung wird im folgenden anhand von Beispielen näher erläutert.

**Beispiel 1: Herstellung von Lithium-(lactato,oxaiato)borat (LLOB) mittels azeotroper Trocknung**

In einem inertisierten (d. h. getrockneten und mit dem Schutzgas Argon gefüllten) 1-I-Doppelmantelreaktor mit Kühler, Wasserabscheider nach Dean-Stark, Rührer und Thermometer wurden 100,9 g einer 72,0%-igen wässrigen Milchsäurelösung (801 mmol), 49,59 g Borsäure (802 mmol) und 100,9 g Oxalsäure-Dihydrat (800 mmol) in 300 ml (ca. 270 g) Toluol suspendiert. Unter gutem Rühren wurden dann insgesamt 30,87 g (418 mmol) reines Lithiumcarbonat mittels einer Dosierbirne portionsweise vorsichtig zugegeben. Dabei kam es zu einer kräftigen Gas- und Schaumentwicklung. Die Feststoffe verklumpten zu einem zähen Brei, der aber durch kräftiges Rühren suspendiert werden konnte.

Nach Abklingen der Schaumentwicklung wurde die Heizöltemperatur innerhalb von ca. 1 Stunde auf 130 °C erhöht. Das azeotrop gebildete Wasser wurde portionsweise entfernt. Nach insgesamt 10-stündigem Refluxieren hatten sich insgesamt 96,7 g Wasser abgeschieden.

Es wurde auf 40 °C abgekühlt und das Reaktionsgemisch auf eine Glasfritte abgelassen und filtriert. Der farblose Feststoff wurde zweimal mit Toluol und einmal mit Pentan gewaschen.

Das feinpulvrige Produkt wurde zunächst bei Raumtemperatur, dann bei 100 °C am Rotationsverdampfer getrocknet.

Ausbeute: 150,8 g (= 97 % der Theorie)

Analyse:

| | Ist | theoretisch |
|---|---|---|
| Li | 5,05 | 5,16 |
| B | 4,9 | 5,16 |

$\delta^{11}B$ (DMF): 8,8 ppm; zusätzlich sehr wenig (< 5 %) Nebenprodukte mit Borverschiebungen bei 10,1 und 7,5 ppm

Thermogravimetrie (TGA): Zersetzungsbeginn bei ca. 270 °C

**Beispiel 2: Herstellung von Lithium-(oxalato,salicylato)borat (LOSB) mittels azeotroper Trocknung**

In der in Beispiel 1 beschrieben Apparatur wurden 49,59 g Borsäure, 100,9 g Oxalsäure-Dihydrat und 110,45 g Salicylsäure in 400 ml Xylol suspendiert, portionsweise mit 30,9 g Lithiumcarbonat versetzt und anschließend 6 Stunden refluxiert. Während dieser Zeit schieden sich 78 g Wasser ab.

Es wurde auf 50 °C abgekühlt, filtriert und der unlösliche farblose Feststoff mit Xylol und dann mit Hexan gewaschen. Nach Trocknung bei Raumtemperatur im Ölpumpenvakuum wurde ein farbloses Pulver erhalten:

Ausbeute: 183,5 g (95 % der Theorie)

$\delta^{11}B$ (DMF): 5,5 ppm (zusätzlich Verunreinigungen bei 7,4 ppm (LOB, ca. 10 %) und 3,8 (LSB, ca. 13 %)

TGA: Zersetzungsbeginn bei ca. 210 °C

Das Rohprodukt wurde durch Umkristallisation in THF/Diethylether gereinigt.

**Beispiel 3: Herstellung von Hydrogen-(salicylato,oxalato)borat (HSOB) durch Totaleindampfung am Rotationsverdampfer**

In einem 1-I-Rundkolben wurden 61,8 g Borsäure, 138,1 g Salicylsäure und 126,1 g Oxalsäure-Dihydrat (jeweils 1 mol) gemischt und am Rotationsverdampfer bei nur geringfügig vermindertem Druck (900 mbar) auf 110 bis 115 °C erhitzt. Nach etwa 15 Minuten schmolz die Reaktionsmischung vollständig auf, und Wasser begann zu destillieren. Nach weiteren 30 Minuten wurde der Druck weiter gesenkt, worauf die Mischung heftiger siedete. Gegen Ende der Wasserabscheidung (nach etwa 2 Stunden, gerechnet ab Reaktionsbeginn) bei einem Druck von 20 bis 30 mbar und einer Ölbadtemperatur von 125 °C verfestigte sich die Reaktionsmasse zu harten, teils beigegefärbten Brocken. Zudem waren kleine Mengen (wenige g) eines farblosen, nadelförmigen Sublimates zu beobachten, die als Salicylsäure identifiziert wurden.

Die Reaktionsmasse wurde abgekühlt und mittels Mörser und Pistill zermahlen. Das nunmehr weiße, pulverförmige Reaktionsgut wurde nochmals am Rotationsverdampfer bei 115 bis 125 °C und zuletzt 10 mbar bis zur Gewichtskonstanz getrocknet (2 Stunden).

Ausbeute: 216 g (92 %) fast farbloses Pulver

Das Produkt war in Propylencarbonat, γ-Butyrolacton, 1,2-Dimethoxyethan, Aceton und Dimethylformamid sehr gut löslich.

$\delta^{11}B$ (1,2-DME): 5,5 ppm (Hauptprodukt)
7,6 ppm (HOB, ca. 15 %)
3,5 ppm (Hydrogen-bis(salicylato)borat, ca. 10 %)

Das Rohprodukt wurde durch Rekristallisation aus Aceton/MTBE gereinigt.

## Patentansprüche

1. Borchelatkomplexe der allgemeinen Formel

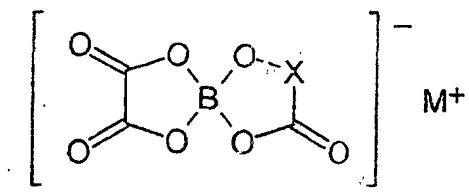

mit
entweder X = -C($R^1R^2$)- oder -C($R^1R^2$)-C(=O)-, wobei
$R^1$, $R^2$ = unabhängig voneinander H, Alkyl (mit 1 bis 5 C-Atomen), Aryl, Silyl oder Polymer sind, und einer der Alkylreste $R^1$ oder $R^2$ mit einem weiteren Chelatoboratrest verbunden sein kann,
oder X = 1,2-Aryl, mit bis zu 2 Substituenten S in den Positionen 3 bis 6

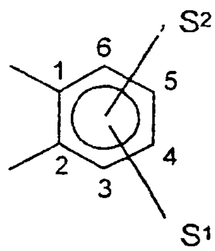

wobei $S^1$, $S^2$ = unabhängig voneinander Alkyl (mit 1 bis 5 C-Atomen), Fluor oder Polymer sind, sowie $M^+$ = $Li^+$ , $Na^+$, $K^+$, $Rb^+$, $Cs^+$ oder $[(R^3R^4R^5R^6)N]^+$ oder $H^+$ ist, mit $R^3$,$R^4$,$R^5$,$R^6$ = unabhängig voneinander H oder Alkyl.

2. Borchelatkomplex nach Anspruch 1, **dadurch gekennzeichnet, dass** der Borchelatkomplex
Hydrogen-(malonato,oxalato)borat,
Hydrogen-(glykolato,oxalato)borat,
Hydrogen-(lactato,oxalato)borat,
Hydrogen-(oxalato,salicylato)borat,
Bis-[hydrogen(oxalato,tartrato)borat], oder
ein Lithium-, Cäsium- oder Tetraalkylammoniumsalz der genannten Verbindungen ist.

3. Verfahren zur Herstellung von Hydrogenborchelatkomplexen gemäß einem der Ansprüche 1 oder 2, **dadurch gekennzeichnet, dass** Borsäure oder ein Boroxid mit Oxalsäure und einem Chelatbildner H-O-X-(CO)-O-H umgesetzt wird.

4. Verfahren zur Herstellung von Alkalimetallborchelatkomplexsalzen, bzw. Ammoniumborchelatkomplexsalzen gemäß einem der Ansprüche 1 oder 2, **dadurch gekennzeichnet, dass** Borsäure oder ein Boroxid mit Oxalsäure, einem Chelatbildner H-O-X-(CO)-O-H und einer oxidischen Alkalimetallquelle, bzw. einem Ammoniumsalz, umgesetzt wird.

5. Verwendung der Hydrogenborchelatkomplexe gemäß einem der Ansprüche 1 oder 2 als supersaure Katalysatoren in der organischen Synthese.

6. Verwendung der Lithiumborchelatkomplexsalze gemäß einem der Ansprüche 1 oder 2 als Elektrolyte in galvanischen Zellen.

7. Verwendung der Lithiumborchelatkomplexsalze gemäß einem der Ansprüche 1 oder 2 als Elektrolyte in Lithiumbatterien.

8. Verwendung der Ammonium- und Cäsiumborchelatkomplexsalze gemäß einem der Ansprüche 1 oder 2 in elektrolytischen Doppelschichtkondensatoren.

## Claims

1. Boron chelate complexes of the general formula

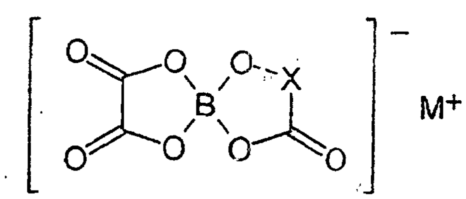

where
X is either -C($R^1R^2$)- or -C($R^1R^2$)-C(=O)-, in which $R^1$, $R^2$ independently of one another denote H, alkyl (with 1 to 5 C atoms), aryl, silyl or a polymer, and one of the alkyl radicals $R^1$ or $R^2$ may be bonded to a further chelatoborate radical,
or X denotes 1,2-aryl with up to two substituents S in the positions 3 to 6

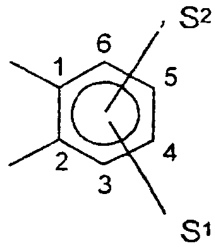

in which $S^1$, $S^2$ independently of one another denote alkyl (with 1 to 5 C atoms), fluorine or a polymer, and M+ denotes $Li^+$, $Na^+$, $K^+$, $Rb^+$, $Cs^+$ or
$[(R^3R^4R^5R^6)N]^+$ or $H^+$,
where $R^3$, $R^4$, $R^5$, $R^6$ independently of one another denote H or alkyl.

2. Boron chelate complex according to claim 1, **characterised in that** the boron chelate complex is hydrogen-(malonato,oxalato)borate, hydrogen-(glycolato,oxalato)borate, hydrogen-(lactato,oxalato)borate, hydrogen-(oxalato,salicylato)borate, bis-[hydrogen-(oxalato,tartrato)borate, or a lithium, caesium or tetraalkylammonium salt of the aforementioned compounds.

3. Method for the production of hydrogen boron chelate complexes according to one of claims 1 or 2, **characterised in that** boric acid or a boron oxide is reacted with oxalic acid and a chelate-forming agent H-O-X-(CO)-O-H.

4. Method for the production of alkali metal boron chelate complex salts or ammonium boron chelate complex salts according to one of claims 1 or 2, **characterised in that** boric acid or a boron oxide is reacted with oxalic acid, a chelate-forming agent H-O-X-(CO)-O-H and an oxidic alkali metal source or an ammonium salt.

5. Use of the hydrogen boron chelate complexes according to one of claims 1 or 2 as super acid catalysts in organic syntheses.

6. Use of the lithium boron chelate complex salts according to one of claims 1 or 2 as an electrolyte in electrolytic cells.

7. Use of the lithium boron chelate complex salts according to one of claims 1 or 2 as an electrolyte in lithium batteries.

8. Use of the ammonium and caesium boron chelate complex salts according to one of claims 1 or 2 in electrolytic double-layer capacitors.

## Revendications

1. Complexe de chélate de bore de formule générale
dans laquelle

$$\text{soit } X = -C(R^1R^2)- \text{ soit } -C(R^1R^2)-C(=O)-,$$

où
$R^1$ et $R^2$ sont indépendamment l'un de l'autre H, un groupe alkyle (avec 1 à 5 atomes de carbone), un groupe aryle, un groupe silyle ou un polymère, et un des résidus d'alkyle en $R^1$ ou $R^2$ peut être lié avec un autre résidu de chélate de bore,
soit X = un groupe 1,2-aryle, avec jusqu'à 2 substituants S dans les positions 3 à 6
dans laquelle $S^1$ et $S^2$ = indépendamment l'un de l'autre un groupe alkyle (avec 1 à 5 atomes de carbone), un atome de fluor ou un polymère,
ainsi que $M^+ = Li^+$, $Na^+$, $K^+$, $Rb^+$, $Cs^+$ ou $[(R^3R^4R^5R^6)N]^+$ ou $H^+$, avec $R^3,R^4,R^5,R^6$ = indépendamment les uns des autres H ou un groupe alkyle.

2. Complexe de chélate de bore selon la revendication 1, **caractérisé en ce que**, le complexe de chélate de bore est

un hydrogéno-(malonato,oxalato)borate,
un hydrogéno-(glycolato,oxalato)borate,
un hydrogéno-(lactato,oxalato)borate,
un hydrogéno-(oxalato,salicylato)borate,
un bis-[hydrogéno(oxalato,tartrato)borate], ou
un sel d'ammonium, de tétraalkyle de césium ou de lithium d'un composé cité précédemment.

**3.** Procédé pour la fabrication de complexes d'hydrogénochélate de bore selon l'une des revendications 1 ou 2, **caractérisé en ce que**, l'acide borique ou un oxyde de bore avec un acide oxalique et un chélateur H-O-X-(CO)-O-H est converti.

**4.** Procédé pour la fabrication de sels de complexes de chélate de bore de métal alcalin ou de sels de complexes de chélate de bore d'ammonium, selon l'une quelconque des revendications 1 ou 2, **caractérisé en ce que** l'acide borique ou un oxyde de bore avec de l'acide oxalique et un chélateur H-O-X-(CO)-O-H et une source de métal alcalin oxydant resp. un sel d'ammonium est converti.

**5.** Utilisation de complexes d'hydrogénochélate de bore selon l'une quelconque des revendications 1 ou 2 comme catalyseurs superacides dans la synthèse organique.

**6.** Utilisation de sels de complexes de chélate de bore de lithium selon l'une quelconque des revendications 1 ou 2 comme électrolytes dans des cellules galvaniques.

**7.** Utilisation de sels de complexes de chélate de bore de lithium selon l'une des revendications 1 ou 2 comme électrolytes dans une batterie au lithium.

**8.** Utilisation de sels de complexes de chélate de bore de césium ou d'ammonium selon l'une quelconque des revendications 1 ou 2 dans des condensateurs de double couche électrolytiques.

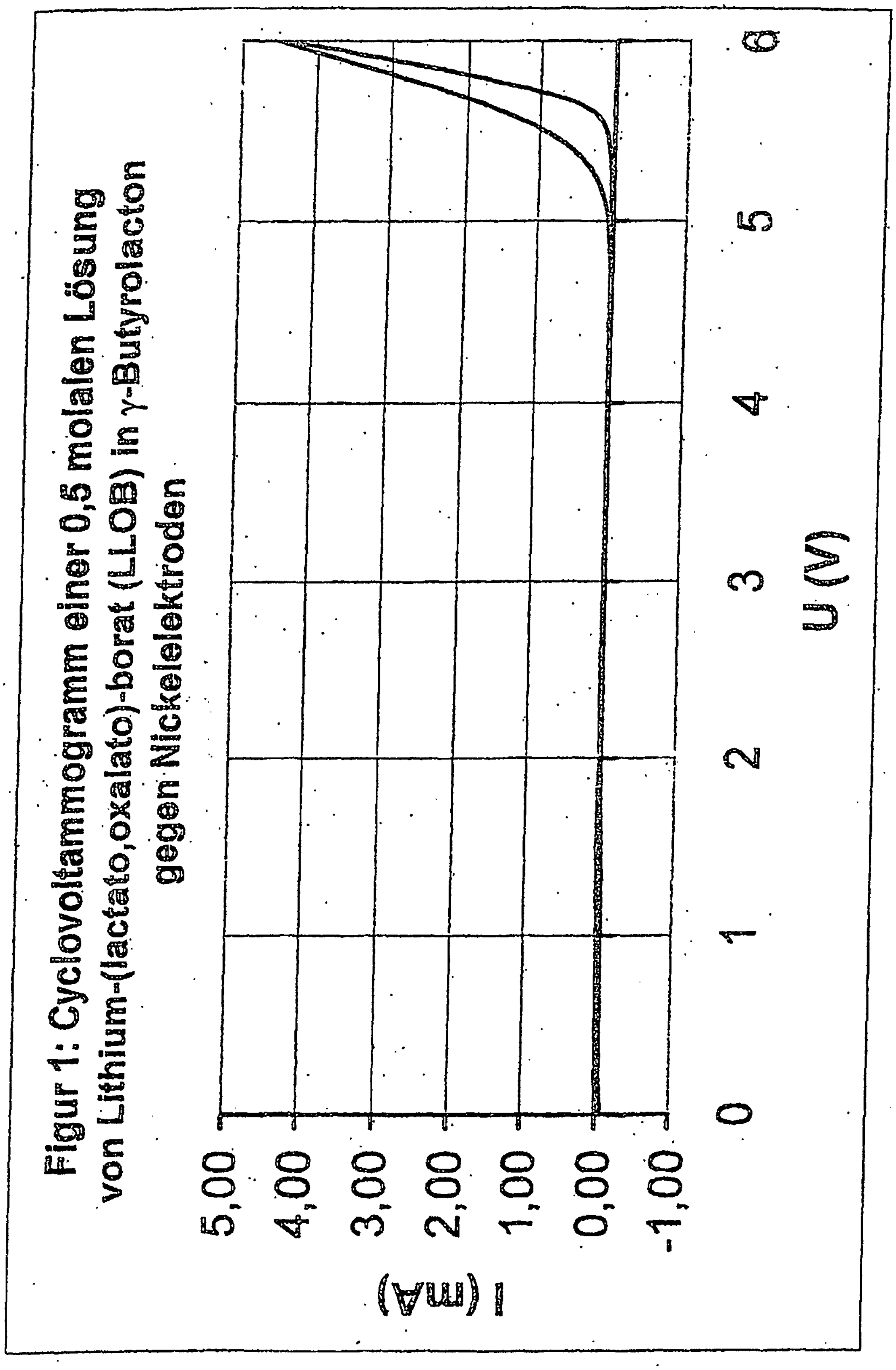


Figur 1: Cyclovoltammogramm einer 0,5 molalen Lösung von Lithium-(lactato,oxalato)-borat (LLOB) in γ-Butyrolacton gegen Nickelelektroden